# EUROPÄISCHE PATENTSCHRIFT

(11) **EP 2 423 651 B1**
(45) Veröffentlichungstag und Bekanntmachung des Hinweises auf die Patenterteilung: **11.11.2020**
(21) Anmeldenummer: 11006672.7
(22) Anmeldetag: 14.08.2011
(51) Int. Cl.: G01F 1/84

(54) **Verfahren zur Bestimmung der Viskosität eines Mediums mit einem Coriolis-Massedurchflussmessgerät**
Method for measuring the viscosity of a medium with a coriolis volume flow measuring device
Procédé de détermination de la viscosité d'un milieu à l'aide d'un débitmètre de masse à effet de Coriolis

(30) Priorität: 24.08.2010 DE 102010035341
(43) Veröffentlichungstag der Anmeldung: 29.02.2012
(73) Patentinhaber: Krohne AG, 4019 Basel (CH)
(72) Erfinder: Hussain, Yousif, Dr., Weston Favell, Northampton NN3 3DA (GB); Wang, Tao, Dr., Rough Common, Canterbury Kent, CT2 9DG (GB)
(74) Vertreter: Gesthuysen, Michael

(56) Entgegenhaltungen:
- WO-A1-2009/120222
- WO-A1-2010/103075
- US-A- 5 230 254

## Beschreibung

Die Erfindung betrifft ein Verfahren zur Bestimmung der Viskosität eines Mediums mit einem Coriolis-Massedurchflussmessgerät, wobei das Coriolis-Massedurchflussmessgerät mindestens zwei von dem Medium durchströmbare Messrohre und eine Messvorrichtung aufweist, wobei die Messvorrichtung mindestens zwei Aktuatoranordnungen aufweist, wobei durch die Messrohrmittelachsen eine Messrohrebene definiert ist, und wobei die Aktuatoranordnungen beidseitig der Messrohrebene und außerhalb der Messrohrebene angeordnet sind, wobei die Messrohre mit der Messvorrichtung zu entgegengesetzt gerichteten Torsionsschwingungen mit einer Frequenz F₁ angeregt werden, indem die Aktuatoranordnungen wechselweise mit entgegengesetzten Wirkrichtungen angesteuert werden, und wobei durch Auswertung von Messwerten der Messvorrichtung zumindest die Viskosität des Mediums bestimmt wird.

Coriolis-Massedurchflussmessgeräte sind in einer Vielzahl von Ausgestaltungen im Stand der Technik bekannt. Unterschieden wird beispielsweise zum einen zwischen der Anzahl der Messrohre eines Messgeräts und zum anderen, ob es sich um gebogene oder um gerade Messrohre handelt. Zur Messung des Massedurchflusses werden die Messrohre zu einer Schwingung angeregt, wobei die ein- und auslaufseitigen Enden der Messrohre ohne Durchfluss in Phase zueinander schwingen. Mit Massedurchfluss verursacht die Trägheitskraft durch die Coriolisbeschleunigung eine Phasenverschiebung innerhalb der Schwingungen der Messrohre, die mit Sensorenordnungen erfasst und als Messsignal für die Durchflussmessung ausgewertet werden kann.

Des Weiteren sind im Stand der Technik, beispielsweise aus der US 6,006,609, Coriolis-Massedurchflussmessgeräte mit einem einzigen Messrohr bekannt, wobei das Messrohr einerseits zur Erfassung des Massedurchflusses verwendet werden kann, indem es ein Schwingung senkrecht zu seiner axialen Erstreckung versetzt wird, das Rohr schwingt auch hier - zur Durchflussmessung - in einer Schwingungsebene. Andererseits kann das Messrohr jedoch auch in eine Torsionsschwingung versetzt werden, wobei durch Auswertung dieser Torsionsschwingung Rückschlüsse auf die Viskosität des innerhalb des Messrohrs strömenden Mediums gezogen werden können. Die dazu erforderlichen gleichungsmäßigen physikalischen Zusammenhänge sind seit langem bekannt und sind hier nicht zentraler Betrachtungsgegenstand. Die Torsionsschwingungen bewirken jedenfalls, dass in dem strömenden Medium in Umfangsrichtung wirkende Scherkräfte durch die Messrohrwände erzeugt werden, wodurch den Torsionsschwingungen Schwingungsenergie entzogen und in dem Medium dissipiert wird. Um die Torsionsschwingung des Messrohrs aufrecht zu erhalten, ist es erforderlich, dass dem Messrohr zusätzliche Anregungsleistung zugeführt werden muss. Aus dem Maß der zusätzlich zugeführten Anregungsleistung zur Aufrechterhaltung der Torsionsschwingung kann mittels des Messaufnehmers die Viskosität des Mediums bestimmt werden.

Die US 5,230,254 offenbart ein Coriolis-Massedurchflussmessgerät mit einer Vielzahl von vibrierenden Messrohren. Die Messrohre sind beispielsweise sternförmig an einem zentralen Sammler befestigt, der die Messrohre einlaufseitig und auslaufseitig zusammenfasst. Die Messrohre sind wechselweise an sternförmigen Befestigungsscheiben befestigt, so dass die Messrohre in zwei Gruppen zusammengefasst sind, die im Betriebszustand gegenläufig zueinander schwingen.

Die aus dem Stand der Technik bekannten und zur Messung der Viskosität eines Mediums geeigneten Coriolis-Massedurchflussmessgeräte weisen jedoch den Nachteil auf, dass aufwendige Messvorrichtungen zur Erfassung der Torsionsschwingung wie beispielsweise in der US 6,006,609 erforderlich sind.

Ausgehend von dem zuvor beschriebenen Stand der Technik liegt der vorliegenden Erfindung die Aufgabe zugrunde, ein Verfahren zur Bestimmung der Viskosität mit einem Coriolis-Massedurchflussmessgerät anzugeben, durch das auf aufwendige konstruktive Maßnahmen am Coriolis-Massedurchflussmessgerät verzichtet werden kann.

Die vorgenannte Aufgabe ist bei einem gattungsgemäßen Verfahren dadurch gelöst, dass bei festgelegter Anregungsleistung der Messvorrichtung die erreichte Amplitude der Torsionsschwingungen für die Bestimmung der Viskosität des Mediums ausgewertet wird.

Die Aktuatoranordnungen sind vorzugsweise mittig in Bezug auf die Längserstreckung der Messrohre an den Messrohren befestigt, wobei jeweils ein erster Teil einer Aktuatoranordnung an dem einen Messrohr und der zweite Teil einer Aktuatoranordnung an dem anderen Messrohr befestigt ist. Die Aktuatoranordnungen sind beidseitig der Messrohrebene befestigt, so dass eine Aktuatoranordnung auf der einer Seite der Messrohrebene an den Messrohren angeordnet ist und die andere Aktuatoranordnung auf der anderen Seite der Messrohrebene angeordnet ist. Mit anderen Worten sind die Aktuatoranordnungen außerhalb der Messrohrebene angeordnet. Vorzugsweise sind die beiden Aktuatoranordnungen symmetrisch zur Messrohrebene angeordnet.

Die Messrohrebene wird durch die Messrohrmittelachsen definiert, es handelt sich um die Ebene, in der die beiden Messrohre liegen, und es ist üblicherweise die Ebene, in der die Messrohre zur Bestimmung des Massedurchflusses hauptsächlich schwingen. "Hauptsächlich" bedeutet hier, dass stets auch Schwingungsanteile vorhanden sein können, die geringfügig außerhalb dieser Ebene liegen; diese sollen aber hier nicht berücksichtigt werden.

Durch die Ansteuerung der Aktuatoranordnungen mit wechselseitig unterschiedlichen Wirkrichtungen jeweils oberhalb bzw. unterhalb der Messrohrebene kann den beteiligten Messrohren jeweils eine Torsionsschwingung aufgeprägt werden, so dass die Messrohre rotativ gegenphasig zueinander schwingen. Die Gegenphasigkeit der Torsionsschwingungen der Messrohre bietet den Vorteil, dass auch während die Messrohre in Schwingungen versetzt sind, der Masseschwerpunkt des Coriolis-Massedurchflussmessgeräts im Wesentlichen ortsfest bleibt, wodurch die erfassten Messwerte weniger beeinflusst sind und die Qualität der Messwerte gesteigert wird, ohne dass konstruktive Veränderungen an dem Coriolis-Massedurchflussmessgerät erforderlich sind.

Durch die beschriebene Ansteuerung der Aktuatoranordnungen werden die Messrohre an gegenüberliegenden Stellen des jeweiligen Messrohrumfangs gegeneinander abgestoßen bzw. aneinander herangezogen, so dass die Torsionsschwingungen sehr definiert aufgeprägt werden und Störschwingungen verhindert werden, die die Messergebnisse unerwünscht beeinflussen. Die Anregung mit nur einem einzigen Aktuator entweder oberhalb oder unterhalb der Messrohrebene würde dazu führen, dass die Messrohre zusätzlich zu der rotativen Schwingung auch zu Schwingungsanteilen in der Messrohrebene angeregt würden, die eine Auswertung der reinen Torsionsschwingungen störten.

Die Torsionsschwingungen der Messrohre erfolgen vorzugsweise ausschließlich zwischen zwei Knotenplatten, die in den Endbereichen der Messrohre die Messrohre miteinander verbinden und ein Auskoppeln der Schwingungen auf das das Messgerät umgebende Rohrleitungssystem unterbinden. Bei einem Massedurchflussmessgerät mit zwei Messrohren schwingen die Messrohre durch die Anregung zu Torsionsschwingungen im Wesentlichen um die jeweilige Messrohrmittelachse. Bei Massedurchflussmessgeräten mit beispielsweise vier Messrohren schwingen je zwei Messrohre gemeinsam um eine zwischen den beiden Messrohren liegende Achse. Die Verwendung eines Massedurchflussmessgeräts mit lediglich zwei Messrohren ist jedoch bevorzugt.

Die Viskosität wird durch Auswertung der Messwerte der Messvorrichtung bestimmt, was bedeutet, dass die Viskosität aus den Schwingungsmesswerten bzw. einer Dämpfung bestimmt wird. Die Frequenz F₁ für die Torsionsschwingungen beträgt beispielsweise 720 Hz.

Um den Massedurchfluss und die Viskosität des Mediums gleichzeitig zu bestimmen, ist gemäß einer bevorzugten Ausgestaltung des Verfahrens vorgesehen, dass die beiden Messrohre durch die Messvorrichtung zeitgleich zur Anregung zu den Torsionsschwingungen zusätzlich zu Ebenenschwingungen in der gemeinsamen Messrohrebene mit einer von der Frequenz F₁ verschiedenen Frequenz F₂ angeregt werden. "Ebenenschwingungen" bedeutet, dass die Schwingungen der Messrohre in einer gemeinsamen Ebene erfolgen, wobei die Messrohre vorzugsweise auch bei den Ebenenschwingungen gegenphasig zueinander schwingen. Aus den mit der Messvorrichtung ermittelten Messwerten werden dann zumindest der Massedurchfluss und die Viskosität des Mediums bestimmt. Dadurch, dass die Torsionsschwingungen und die Ebenenschwingungen eine unterschiedliche Frequenz aufweisen, können diese Schwingungen durch die Messvorrichtung prinzipiell auch unabhängig voneinander ausgewertet werden, so dass eine Beeinflussung der Messwerte der einen Schwingung durch die andere Schwingung ausgeschlossen werden kann.

Die Messrohre werden durch ein gemeinsames Anregungssignal durch die Aktuatoranordnungen gleichzeitig zu Torsionsschwingungen und Ebenenschwingungen bei verschiedenen Frequenzen angeregt. Die Messrohre werden dabei durch die Aktuatoranordnungen wechselweise auf den beiden Seiten der Messrohrebene auseinandergedrückt bzw. zusammengezogen, so dass die Torsionsschwingung mit der Frequenz F₁ entsteht. Gleichzeitig werden mit dem gemeinsamen Anregungssignal die Messrohre zumindest durch ein Auseinanderdrücken zu Ebenenschwingungen bei der Frequenz F₂ in der Messrohrebene angeregt. Die Erfassung und Auswertung für die beiden Frequenzen und die unterschiedlichen Messergebnisse erfolgen getrennt voneinander.

Gemäß einer zu der vorgenannten Ausgestaltung alternativen Ausgestaltung des Verfahrens ist vorgesehen, dass die Messrohre durch die Messvorrichtung zu verschiedenen Zeiten zu Torsionsschwingungen mit einer Frequenz F₁ oder zu Ebenenschwingungen mit einer von der Frequenz F₁ verschiedenen Frequenz F₂ angeregt werden. Die Messrohre werden dazu beispielsweise zunächst zu Torsionsschwingungen angeregt, wobei anschließend die Anregung zu den Ebenenschwingungen erfolgt, wahlweise bevor oder nachdem die Torsionsschwingen vollständig abgeklungen sind. Dadurch, dass die Anregungen zu den Torsionsschwingungen bzw. zu den Ebenenschwingungen mit verschiedenen Frequenzen erfolgt, ist sichergestellt, dass die Auswertung der Messwerte zur Bestimmung des Massedurchflusses und der Viskosität unbeeinflusst und getrennt voneinander erfolgt. Aus den Messwerten der Torsionsschwingungen wird die Viskosität und aus den Messwerten der Ebenenschwingungen der Massendurchfluss bestimmt.

Damit sichergestellt ist, dass eine gegenseitige Beeinflussung der Schwingungen ausgeschlossen ist, müssen die Frequenzen F₁ und F₂ einen ausreichenden Abstand zueinander aufweisen. Vorzugsweise werden als Frequenzen F₁ und F₂ Eigenfrequenzen der Messrohre in dem jeweiligen Schwingungstyp gewählt, wobei insbesondere solche Frequenzen gewählt werden, die einen Mindest-Frequenzabstand zueinander aufweisen. Gemäß einer bevorzugten Weiterbildung ist vorgesehen, dass zwischen der Frequenz F₁ der Torsionsschwingungen und der Frequenz F₂ der Ebenenschwingungen eine Differenz von mindestens 2 % der Frequenz der Torsionsschwingungen liegt, bevorzugt 3,5 %, besonders bevorzugt 5 %. Durch einen derartigen Frequenzabstand ist sichergestellt, dass die Messergebnisse weitestgehend unbeeinflusst voneinander sind und getrennt ausgewertet werden können, ohne dass die Messergebnisse der Torsionsschwingungen die Messergebnisse der Ebenenschwingungen beeinflussen und umgekehrt. Vorzugsweise beträgt der Frequenzabstand unabhängig von den Frequenzen mindestens 25 Hz.

Zur Bestimmung der Viskosität aus den Messergebnissen der Torsionsschwingungen sind verschiedene Methoden bekannt, wobei eine Weiterbildung des erfindungsgemäßen Verfahrens sich dadurch auszeichnet, dass aus den Messwerten der Messvorrichtung der Dämpfungsfaktor der Torsionsschwingungen der beiden Messrohre bestimmt wird, wobei aus dem Dämpfungsfaktor die Viskosität des Mediums berechnet wird. Durch die durch das Medium hervorgerufenen Scherkräfte werden die Torsionsschwingungen signifikant gedämpft, so dass bei Unterbrechung der Anregung durch die Aktuatoranordnungen der Dämpfungsfaktor bestimmt werden kann. Der Kehrwert des Dämpfungsfaktors ist dabei direkt proportional zur Viskosität des Mediums.

Für die Bestimmung der Viskosität des Mediums ist durch das erfindungsgemäße Verfahren eine Möglichkeit gegeben, nämlich indem bei festgelegter Anregungsleistung der Messvorrichtung die erreichte Amplitude der Torsionsschwingung für die Bestimmung der Viskosität des Messmediums ausgewertet wird. Dadurch, dass die Anregungsleistung innerhalb des Mediums dissipiert wird und über die Höhe der dissipierten Anregungsleistung auf die Viskosität des Mediums geschlossen werden kann, besteht durch das Verfahren eine Möglichkeit, die Viskosität zu bestimmen, wobei diese Berechnungsmethode allein oder zusätzlich zur Bestimmung der Viskosität über den Dämpfungsfaktor durchgeführt werden kann.

Alternativ zur Bestimmung der Amplitude bei festgelegter Anregungsleistung ist gemäß einer nicht zur Erfindung gehörenden Ausgestaltung des Verfahrens vorgesehen, dass bei festgelegter Amplitude der Torsionsschwingungen die zur Anregung benötigte Anregungsleistung für die Bestimmung der Viskosität des Messmediums ausgewertet wird. Prinzipiell wertet auch diese Methode die durch die Scherspannung dissipierte Energie aus, woraus Rückschlüsse auf die Viskosität des innerhalb der Rohrleitung fließenden Mediums geschlossen werden.

Zur besonders vorteilhaften Auswertung der Schwingungen der Messrohre ist gemäß einer weiteren Ausgestaltung des Verfahrens vorgesehen, dass die Messvorrichtung mindestens vier Sensorenanordnungen umfasst, wobei jeweils zwei Sensorenanordnungen oberhalb und unterhalb der Messrohrebene angeordnet sind, und dass mit den beiden jeweils auf der einen Seite der Messrohrebene liegenden Sensoranordnungen die Torsionsschwingungen und mit den jeweils auf der anderen Seite der Messrohrebene liegenden Sensoranordnungen die Ebenenschwingungen erfasst werden. Die jeweils zueinander gehörigen Sensoranordnungen sind vorzugsweise symmetrisch zueinander angeordnet. Die Sensoranordnungen liegen stets außerhalb der Schwingungebene, so dass auch die Torsionsschwingungen mit den Sensoranordnungen erfassbar sind. Über die Längserstreckung der Messrohre sind jeweils zwei Sensoranordnungen rechts und jeweils zwei Sensoranordnungen links von den Aktuatoranordnungen positioniert, so dass sich auch über die Längserstreckung der Messrohre vorzugsweise eine symmetrische Anordnung ergibt.

Die Aktuatoranordnungen und auch die Sensoranordnungen sind vorteilhaft mit Haltevorrichtungen an den Messrohren befestigt, wobei auch für die Sensoranordnungen gilt, dass eine Sensoranordnung aus zwei Teilen besteht und jeweils ein erster Teil einer Sensoranordnung an einem Messrohr und der jeweils zweite Teil einer Sensoranordnung an dem anderen Messrohr mit einer eigenen Haltervorrichtung befestigt ist, so dass der erste Teil einer Sensoranordnung und der zweite Teil einer Sensoranordnung miteinander wechselwirken können.

Gemäß einer bevorzugten Weiterbildung des Verfahrens ist vorgesehen, dass aus den Messwerten der Torsionsschwingungen Diagnoseinformationen über den Wartungszustand des Massedurchflussmessgeräts abgeleitet werden. Zusätzlich zu den Diagnoseinformationen aus den Torsionsschwingungen kann beispielsweise auch der Dämpfungsfaktor der Ebenenschwingungen zu Diagnosezwecken ausgewertet werden. So werden beispielsweise auch die Messrohre in regelmäßigen Abständen ohne Durchfluss eines Mediums in Torsionsschwingungen und/oder in Ebenenschwingungen versetzt, so dass durch einen Vergleich der aktuellen Messwerte mit vorangehenden Messwerten oder unmittelbar aus den Messwerten selbst Diagnoseinformationen über den Wartungszustand des Messgeräts gewonnen werden.

Gemäß einer letzten Ausgestaltung des Verfahrens ist vorgesehen, dass nach der Anregung der Messrohre zu den Torsionsschwingungen und/oder den Ebenenschwingungen die Aktuatoranordnungen als Sensoranordnungen zur Erfassung von Messwerten verwendet werden. Technisch gesehen sind Aktuatoranordnungen und Sensoranordnungen häufig nicht wesentlich unterschiedlich zueinander ausgestaltet, da sowohl bei Aktuatoranordnungen als auch bei Sensoranordnungen häufig auf der einen Seite als erster Teil einer Anordnung ein Metallkern und auf der anderen Seite einer Anordnung eine Spule vorhanden ist, so dass eine Aktuatoranordnung auch als Sensoranordnung und eine Sensoranordnung grundsätzlich auch als Aktuatoranordnung verwendet werden kann. Die Aktuatoranordnungen werden dazu zunächst als Aktuatoranordnungen verwendet und zur Erzeugung der Torsionsschwingungen und/oder der Ebenenschwingungen verwendet. Anschließend wird die Anregung der Schwingungen gestoppt und mit den nun mitschwingenden, als Sensoranordnungen verwendeten Aktuatoranordnungen die Schwingungen erfasst und die Messwerte anschließend ausgewertet. Selbstverständlich kann die Verwendung der Aktuatoranordnungen als Sensoranordnungen im laufenden Betrieb alternierend manuell oder automatisch umgeschaltet werden, so dass die Messrohre regelmäßig angeregt werden, aber auch eine zeitweise Erfassung von Messwerten erfolgt.

Im Einzelnen gibt es nun eine Vielzahl von Möglichkeiten, das erfindungsgemäße Verfahren auszugestalten und weiterzubilden. Dazu wird verwiesen sowohl auf die dem Patentanspruch 1 nachgeordneten Patentansprüche als auch auf nachfolgende Beschreibung von bevorzugten Ausführungsbeispielen in Verbindung mit der Zeichnung. In der Zeichnung zeigt
- Fig. 1: zwei Messrohre eines Coriolis-Massedurchflussmessgeräts, die mit dem Verfahren zu Torsionsschwingungen angeregt werden,
- Fig. 2: zwei Messrohre eines Coriolis-Massedurchflussmessgeräts, die sowohl zu Torsionsschwingungen als auch zu Ebenenschwingungen angeregt werden,
- Fig. 3: ein Ausführungsbeispiel eines Coriolis-Massedurchflussmessgeräts mit zwei Aktuatoranordnungen und zwei Sensoranordnungen,
- Fig. 4: ein Ausführungsbeispiel eines Coriolis-Massedurchflussmessgeräts mit zwei Aktuatoranordnungen und vier Sensoranordnungen und
- Fig. 5a, 5b: zwei Ausführungsbeispiele der Verfahren als Ablaufdiagramm.

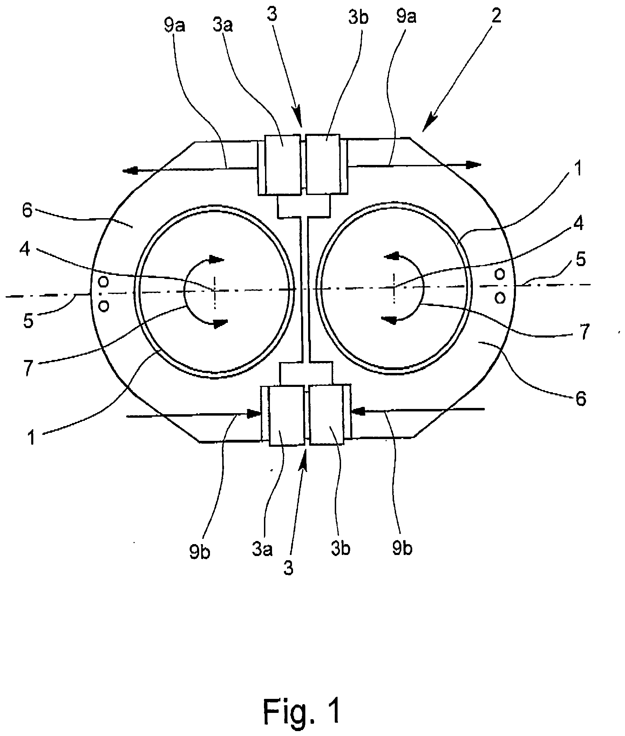

Fig. 1 zeigt zwei von einem Medium durchströmbaren Messrohre 1 für ein Coriolis-Massedurchflussmessgerät, mit dem ein Verfahren zur Bestimmung der Viskosität des Mediums durchgeführt wird. An den Messrohren 1 ist ein Teil einer Messvorrichtung 2 befestigt, wobei die Messvorrichtung 2 mindestens zwei Aktuatoranordnungen 3 umfasst. Jede Aktuatoranordnung 3 umfasst einen ersten Teil 3a und einen zweiten Teil 3b. Die Messrohrmittelachsen 4 der Messrohre 1 definieren eine Messrohrebene 5, in der die Messrohre 1 zur Messung des Massedurchflusses eines Mediums hauptsächlich schwingen. Die Aktuatoranordnungen 3 sind mit Haltevorrichtungen 6 derart an den Messrohren 1 befestigt, dass die Aktuatoranordnungen 3 beidseitig der Messrohrebene 5, jeweils eine Aktuatoranordnung 3 oberhalb der Messrohrebene 5 und eine Aktuatoranordnung 3 unterhalb der Messrohrebene 5, angeordnet sind. Bei dem in Fig. 1 dargestellten Ausführungsbeispiel sind die Aktuatoranordnungen 3 symmetrisch zueinander zur Messrohrebene 5 angeordnet.

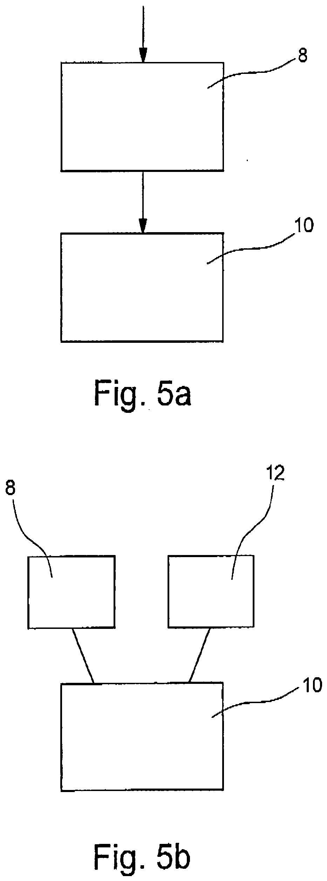

Zur Durchführung des Verfahrens werden die Messrohre 1 mit der Messvorrichtung 2, hier insbesondere mit den Aktuatoranordnungen 3, zu entgegengesetzt gerichteten Torsionsschwingungen 7 mit einer Frequenz F₁ angeregt 8 - siehe auch Fig. 5a und 5b, indem die Aktuatoranordnungen 3 wechselweise mit entgegengesetzten Wirkrichtungen 9 angesteuert werden. So wird beispielsweise die in Fig. 1 oben dargestellte Aktuatoranordnung 3 derart angesteuert, dass sich der erste Teil 3a und der zweite Teil 3b mit entgegengesetzten Wirkrichtungen 9a voneinander wegbewegen, während gleichzeitig die in der Fig. 1 unten dargestellte Aktuatoranordnung 3 den ersten Teil 3a und den zweiten Teil 3b mit entgegengesetzten Wirkrichtungen 9b aufeinander zubewegt, so dass die Messrohre 1 zu Torsionsschwingungen 7 um die Messrohrmittelachsen 4 angeregt 8 - siehe Fig. 5a und 5b - werden. Die Aktuatoranordnungen 3 werden folglich alternierend angesteuert, so dass gleichmäßige Torsionsschwingungen 7 um die Messrohrmittelachsen 4 der Messrohre 1 resultieren. Die Torsionsschwingungen 7 der Messrohre 1 werden mit der Messvorrichtung 2 erfasst, wobei durch Auswertung 10 von Messwerten der Messvorrichtung 2 zumindest die Viskosität des Mediums bestimmt wird.

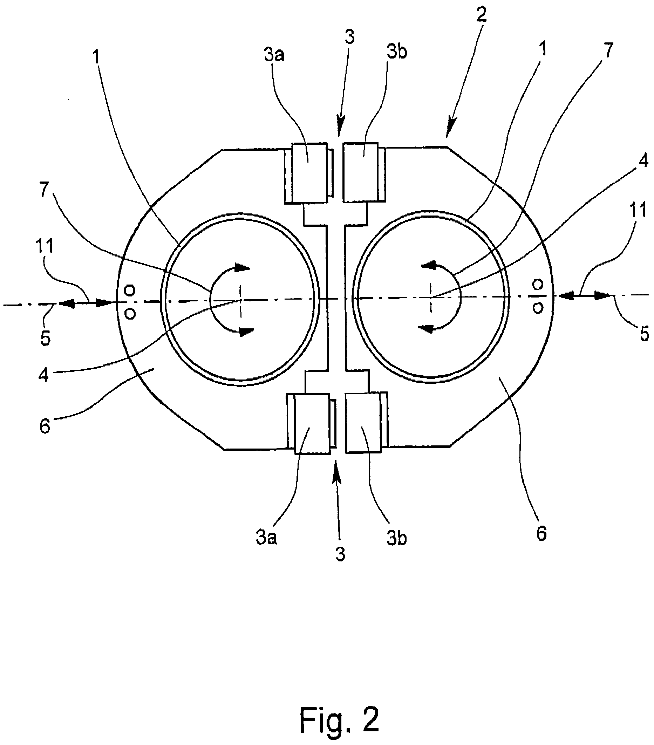

Fig. 2 zeigt zwei Messrohre 1 für ein Coriolis-Massedurchflussmessgerät. An den Messrohren 1 sind mit Haltevorrichtungen 6 die Aktuatoranordnungen 3 beidseitig der Messrohrebene 5 befestigt. Die Messrohre 1 werden durch die Messvorrichtung 2 zu Torsionsschwingungen 7 mit einer Frequenz F₁ angeregt 8 und zeitgleich zu Ebenenschwingungen 11 in der gemeinsamen Messrohrebene 5 mit einer Frequenz F₂ angeregt 12. Aus den mit der Messvorrichtung 2 ermittelten Messwerten werden dabei zumindest der Massedurchfluss und die Viskosität des durch die Messrohre 1 strömenden Mediums bestimmt.

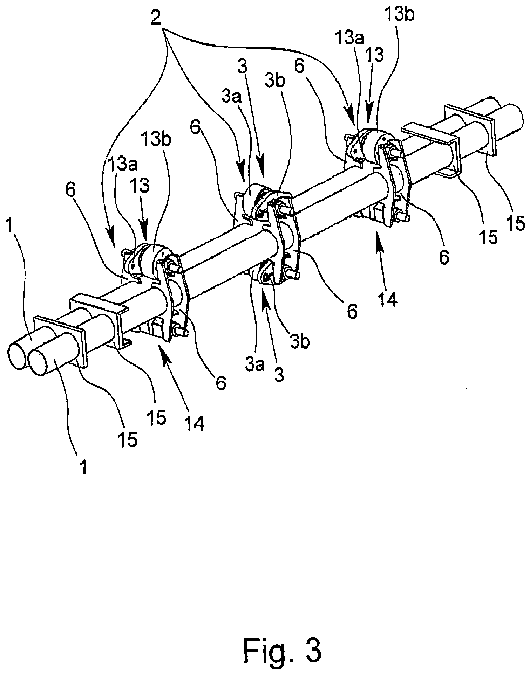

Fig. 3 zeigt zwei Messrohre 1 für ein Coriolis-Massedurchflussmessgerät. Die Messvorrichtung 2 umfasst zwei Aktuatoranordnungen 3, wobei jeweils eine Aktuatoranordnung 3 oberhalb der Messrohrebene 5 und eine Aktuatoranordnung 3 unterhalb der Messrohrebene 5 mit einer Haltevorrichtung 6 für jeweils einen Teil einer Aktuatoranordnung 3 an den Messrohren 1 befestigt ist. An einer Haltevorrichtung 6 sind jeweils die beiden ersten Teile 3a oder die beiden zweiten Teile 3b von zwei Aktuatoranordnungen 3 befestigt. Zusätzlich umfasst die Messvorrichtung 2 bei diesem Ausführungsbeispiel zwei Sensoranordnungen 13, die aus einem ersten Teil 13a einer Sensoranordnung 13 und einem zweiten Teil 13b einer Sensoranordnung 13 bestehen und mit Haltevorrichtungen 6 oberhalb der Messrohrebene 5 befestigt sind. Auf der den Sensoranordnungen 13 gegenüberliegenden Seite der Messrohrebene 5 sind bei diesem Ausführungsbeispiel an den Haltevorrichtungen 6 Ausgleichsgewichte 14 befestigt, die während der Schwingungsphasen jeweils das Gewicht der Sensoranordnungen 13 ausgleichen. Die Messrohre 1 werden mit den Aktuatoranordnungen 3 zu Torsionsschwingungen 7 mit einer Frequenz F₁ angeregt 8 oder zusätzlich zu Ebenenschwingungen 11 in der gemeinsamen Messrohrebene 5 mit einer Frequenz F₂ angeregt 12.

In den Endbereichen der Messrohre 1 sind beidseitig Knotenplatten 15 angeordnet, die den Messbereich der Messrohre 1 - nämlich innerhalb der beiden inneren Knotenplatten 15 - definieren und ein Auskoppeln der Schwingungen auf das - nicht dargestellte - das Coriolis-Massedurchflussmessgerät umgebende Rohrleitungssystem verhindern.

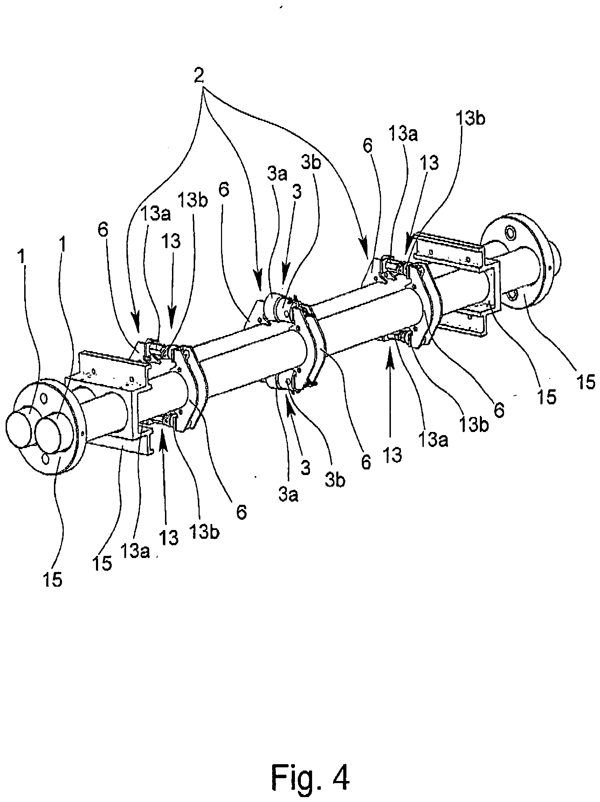

Fig. 4 zeigt zwei Messrohre 1 für ein Coriolis-Massedurchflussmessgerät mit einer Messvorrichtung 2, die bei diesem Ausführungsbeispiel zwei Aktuatoranordnungen 3, jeweils eine oberhalb und eine unterhalb der Messrohrebene 5, und insgesamt vier Sensoranordnungen 13 umfasst. Die Sensoranordnungen 13 und die Aktuatoranordnungen 3 sind jeweils mit Haltevorrichtungen 6 an den Messrohren 1 befestigt, wobei jeweils ein erster Teil 13a einer Sensoranordnung bzw. ein erster Teil 3a einer Aktuatoranordnung 3 an einem Messrohr 1 und ein zweiter Teil 13b einer Sensoranordnung 13 bzw. ein zweiter Teil 3b einer Aktuatoranordnung 3 an dem jeweils anderen Messrohr 1 befestigt sind. Die Messrohre 1 werden mit den Aktuatoranordnungen 3 zu Torsionsschwingungen 7 mit einer Frequenz F₁ angeregt 8 und gleichzeitig mit den Aktuatoranordnungen 3 zu Ebenenschwingungen 12 in der gemeinsamen Messrohrebene 5 mit einer von der Frequenz F₁ verschiedenen Frequenz F₂ angeregt 12. Die Erfassung der Schwingungen - Torsionsschwingungen 7 und Ebenenschwingungen 11 - der Messrohre 1 erfolgt mit den Sensoranordnungen 13, wobei mit den in Fig. 4 jeweils oberhalb der Messrohre 1 angeordneten Sensoranordnungen 13 die Ebenenschwingungen 11 und mit den in Fig. 4 unterhalb der Messrohre 1 dargestellten Sensoranordnungen 13 die Torsionsschwingungen 7 erfasst werden. Durch Auswertung 10 der Messwerte der Messvorrichtung 2 können somit die Viskosität und auch der Massedurchfluss des strömenden Mediums bestimmt werden. In den Endbereichen der Messrohre 1 sind Knotenplatten 15 angeordnet, die ein Auskoppeln der Schwingungen auf ein - nicht dargestelltes - Rohrleitungssystem verhindern.

Fig. 5a zeigt ein Ablaufschema für ein Ausführungsbeispiel eines Verfahrens. Die Messrohre 1 werden mit der Messvorrichtung 2, insbesondere mit den Aktuatoranordnungen 3, zu entgegengesetzt gerichteten Torsionsschwingungen 7 mit einer Frequenz F₁ angeregt 8, indem die Aktuatoranordnungen 3 wechselweise mit entgegengesetzten Wirkrichtungen 9 angesteuert werden, wobei durch Auswertung 10 der mit der Messvorrichtung 2 erfassten Messwerte zumindest die Viskosität des Mediums bestimmt wird.

Fig. 5b zeigt ein weiteres Ablaufschema für ein Ausführungsbeispiel eines Verfahrens zur Bestimmung der Viskosität eines Mediums mit einem Coriolis-Massedurchflussmessgerät , wobei die Messrohre 1 mit der Messvorrichtung 2, insbesondere den Aktuatoranordnungen 3, zu entgegengesetzt gerichteten Torsionsschwingungen 7 mit einer Frequenz F₁ angeregt 8 werden und die Aktuatoranordnungen 3 gleichzeitig zu den Torsionsschwingungen 7 zusätzlich zu Ebenenschwingungen 11 angeregt 12 werden. Durch Auswertung 10 von mit der Messvorrichtung 2 erfassten Messwerten wird der Massedurchfluss und die Viskosität des Mediums bestimmt.

## Patentansprüche

1. Verfahren zur Bestimmung der Viskosität eines Mediums mit einem Coriolis-Massedurchflussmessgerät, wobei das Coriolis-Massedurchflussmessgerät mindestens zwei von dem Medium durchströmbare Messrohre (1) und eine Messvorrichtung (2) aufweist, wobei die Messvorrichtung (2) mindestens zwei Aktuatoranordnungen (3) aufweist, wobei durch die Messrohrmittelachsen (4) eine Messrohrebene (5) definiert ist, und wobei die Aktuatoranordnungen (3) beidseitig der Messrohrebene (5) und außerhalb der Messrohrebene (5) angeordnet sind, wobei die Messrohre (1) mit der Messvorrichtung (2) zu entgegengesetzt gerichteten Torsionsschwingungen (7) mit einer Frequenz F₁ angeregt (8) werden, indem die Aktuatoranordnungen (3) wechselweise mit entgegengesetzten Wirkrichtungen (9) angesteuert werden, und wobei durch Auswertung (10) von Messwerten der Messvorrichtung (2) zumindest die Viskosität des Mediums bestimmt wird,
**dadurch gekennzeichnet,**
**dass** bei festgelegter Anregungsleistung der Messvorrichtung (2) die erreichte Amplitude der Torsionsschwingungen (7) für die Bestimmung der Viskosität des Mediums ausgewertet wird.

2. Verfahren nach Anspruch 1, **dadurch gekennzeichnet, dass** die beiden Messrohre (1) durch die Messvorrichtung (2) zeitgleich zur Anregung zu den Torsionsschwingungen (7) zusätzlich zu Ebenenschwingungen (11) in der gemeinsamen Messrohrebene (5) mit einer von der Frequenz F₁ verschiedenen Frequenz F₂ angeregt (8, 12) werden.

3. Verfahren nach Anspruch 1, **dadurch gekennzeichnet, dass** die Messrohre (1) durch die Messvorrichtung (2) zu verschiedenen Zeiten zu Torsionsschwingungen (7) mit einer Frequenz F₁ oder zu Ebenenschwingungen (11) mit einer von der Frequenz F₁ verschiedenen Frequenz F₂ angeregt (8, 12) werden.

4. Verfahren nach Anspruch 2 oder 3, **dadurch gekennzeichnet, dass** zwischen der Frequenz F₁ der Torsionsschwingungen (7) und der Frequenz F₂ der Ebenenschwingungen (11) eine Differenz von mindestens 2% der Frequenz der Torsionsschwingungen (11) liegt, bevorzugt 3,5%, besonders bevorzugt 5%.

5. Verfahren nach einem der Ansprüche 1 bis 4, **dadurch gekennzeichnet, dass** aus den Messwerten der Messvorrichtung (2) der Dämpfungsfaktor der Torsionsschwingungen (11) der beiden Messrohre (1) bestimmt wird, wobei aus dem Dämpfungsfaktor die Viskosität des Mediums berechnet wird.

6. Verfahren nach einem der Ansprüche 1 bis 5, **dadurch gekennzeichnet, dass** die Messvorrichtung (2) mindestens vier Sensoranordnungen (13) umfasst, wobei jeweils zwei Sensoranordnungen (13) oberhalb und unterhalb der Messrohrebene (5) angeordnet sind, und dass mit den beiden jeweils auf der einen Seite der Messrohrebene (5) liegenden Sensoranordnungen (13) die Torsionsschwingungen (7) und mit den beiden jeweils auf der anderen Seite der Messrohrebene (5) liegenden Sensoranordnungen (13) die Ebenenschwingungen (11) erfasst werden.

7. Verfahren nach einem der Ansprüche 1 bis 6, **dadurch gekennzeichnet, dass** aus den Messwerten der Torsionsschwingungen (7) Diagnoseinformationen über den Wartungszustand des Coriolis-Massedurchflussmessgeräts abgeleitet werden.

8. Verfahren nach einem der Ansprüche 1 bis 7, **dadurch gekennzeichnet, dass** nach der Anregung der Messrohre (1) zu den Torsionsschwingungen (7) und/oder den Ebenenschwingungen (11) die Aktuatoranordnungen (3) als Sensoranordnungen (13) zur Erfassung von Messwerten verwendet werden.

## Claims

1. Method for determining the viscosity of a medium with a Coriolis mass flowmeter, wherein the Coriolis mass flowmeter has at least two measuring tubes (1) that medium can flow through and a measuring device (2), wherein the measuring device (2) has at least two actuator assemblies (3), wherein a measuring tube plane (5) is defined by the measuring tube central axis (4) and wherein the actuator assemblies (3) are arranged on both sides of the measuring tube plane (5) and outside of the measuring tube plane (5), wherein the measuring tubes (1) are excited (8) with the measuring device (2) to an oppositely directed torsional oscillation (7) with a frequency F₁ in that the actuator assemblies (3) are alternately actuated with opposing effective directions (9) and wherein at least the viscosity of the medium is determined by evaluation (10) of measured values from the measuring device (2),
**characterized in**
**that** the amplitude of torsional oscillation (7) reached is evaluated for determining the viscosity of the medium at a set excitation intensity of the measuring device (2).

2. Method according to claim 1, **characterized in that** both measuring tubes (1) are excited (8, 12) at the same time by the measuring device (2) to excitation at torsional oscillation (7) and additionally at plane oscillation (11) in the common measuring tube plane (5) with a frequency F₂ differing from frequency F₁.

3. Method according to claim 1, **characterized in that** the measuring tubes (1) are excited (8, 12) at different times by the measuring device (2) to torsional oscillation (7) with a frequency F₁ or to plane oscillation (11) with a frequency F₂ differing from frequency F₁.

4. Method according to claim 2 or 3, **characterized in that** a difference of at least 2% of the frequency of the torsional oscillation (7), preferably 3.5%, most preferably 5% exists between the frequency F₁ of torsional oscillation (7) and the frequency F₂ of the plane oscillation (11).

5. Method according to any one of claims 1 to 4, **characterized in that** the damping factor of the torsional oscillation (7) of both measuring tubes (1) is determined from the measured values of the measuring device (2), wherein the viscosity of the medium is calculated using the damping factor.

6. Method according to any one of claims 1 to 5, **characterized in that** the measuring device (2) includes at least four sensor assemblies (13), wherein two sensor assemblies (13) are arranged each above and below the measuring tube plane (5) and that the torsional oscillation (7) is detected with both sensor assemblies (13) located on one side of the measuring tube plane (5) and the plane oscillation (11) with both sensor assemblies (13) located on the other side of the measuring tube plane (5).

7. Method according to any one of claims 1 to 6, **characterized in that** diagnostic information about the maintenance status of the Coriolis mass flowmeter are derived from the measured values of the torsional oscillation (7).

8. Method according to any one of claims 1 to 7, **characterized in that** after exciting the measuring tube (1) to torsional oscillation (7) and/or to plane oscillation (11), the actuator assemblies (3) are used as a sensor assemblies (13) for determining measured values.

## Revendications

1. Procédé permettant de déterminer la viscosité d'un milieu à l'aide d'un débitmètre de masse à effet de Coriolis, le débitmètre de masse à effet de Coriolis présentant au moins deux tubes de mesure (1) pouvant être traversés par le milieu et un dispositif de mesure (2), le dispositif de mesure (2) présentant au moins deux ensembles d'actionneurs (3), dans lequel les axes médians de tube de mesure (4) définissent un plan de tube de mesure (5), et dans lequel les ensembles d'actionneurs (3) sont disposés des deux côtés du plan de tube de mesure (5) et à l'extérieur du plan de tube de mesure (5), dans lequel les tubes de mesure (1) sont excités (8) par le dispositif de mesure (2) en oscillations de torsion opposées (7) à une fréquence F₁ en ce que les ensembles d'actionneurs (3) sont pilotés en alternance avec des directions d'action opposées (9), et dans lequel l'évaluation (10) de valeurs de mesure du dispositif de mesure (2) permet de déterminer au moins la viscosité du milieu,
**caractérisé en ce que** pour une puissance d'excitation définie du dispositif de mesure (2), l'amplitude atteinte des oscillations de torsion (7) est évaluée pour déterminer la viscosité du milieu.

2. Procédé selon la revendication 1, **caractérisé en ce que** les deux tubes de mesure (1) sont excités (8, 12) par le dispositif de mesure (2), en même temps que l'excitation en oscillations de torsion (7), en plus en oscillations de plan (11) dans le plan de tube de mesure commun (5) à une fréquence F₂ différente de la fréquence F₁.

3. Procédé selon la revendication 1, **caractérisé en ce que** les tubes de mesure (1) sont excités (8, 12) par le dispositif de mesure (2) à différents moments en oscillations de torsion (7) à une fréquence F₁ ou en oscillations de plan (11) à une fréquence F₂ différente de la fréquence F₁.

4. Procédé selon la revendication 2 ou 3, **caractérisé en ce qu'**entre la fréquence F₁ des oscillations de torsion (7) et la fréquence F₂ des oscillations de plan (11), il existe une différence d'au moins 2 % de la fréquence des oscillations de torsion (11), de préférence de 3,5 %, de plus grande préférence de 5 %.

5. Procédé selon l'une quelconque des revendications 1 à 4, **caractérisé en ce que** le facteur d'amortissement des oscillations de torsion (11) des deux tubes de mesure (1) est déterminé à partir des valeurs de mesure du dispositif de mesure (2), la viscosité du milieu étant calculée à partir du facteur d'amortissement.

6. Procédé selon l'une quelconque des revendications 1 à 5, **caractérisé en ce que** le dispositif de mesure (2) comprend au moins quatre ensembles de capteurs (13), respectivement deux ensembles de capteurs (13) étant disposés au-dessus et au-dessous du plan de tube de mesure (5), et **en ce que** les deux ensembles de capteurs (13), respectivement situés sur un côté du plan de tube de mesure (5), permettent de détecter les oscillations de torsion (7) et les deux ensembles de capteurs (13), respectivement situés sur l'autre côté du plan de tube de mesure (5), permettent de détecter les oscillations de plan (11).

7. Procédé selon l'une quelconque des revendications 1 à 6, **caractérisé en ce que** des informations de diagnostic concernant l'état d'entretien du débitmètre de masse à effet de Coriolis sont dérivées des valeurs mesurées des oscillations de torsion (7).

8. Procédé selon l'une quelconque des revendications 1 à 7, **caractérisé en ce qu'**après l'excitation des tubes de mesure (1) en oscillations de torsion (7) et/ou en oscillations de plan (11), les ensembles d'actionneurs (3) sont utilisés comme des ensembles de capteurs (13) pour détecter des valeurs de mesure.
